# EUROPEAN PATENT SPECIFICATION

(11) **EP 1 781 516 B1**
(45) Date of publication and mention of the grant of the patent: **30.06.2010**
(21) Application number: 05757991.4
(22) Date of filing: 12.07.2005
(51) Int. Cl.: B60T 7/04

(54) **METHOD AND COMPUTER PROGRAM FOR BRAKING**
BREMSVERFAHREN UND -RECHNERPROGRAMM
PROCEDE ET PROGRAMME INFORMATIQUE DE FREINAGE

(30) Priority: 20.08.2004 SE 0402055
(43) Date of publication of application: 09.05.2007
(73) Proprietor: Scania CV Aktiebolag (publ), 151 87 Södertälje (SE)
(72) Inventor: SUNDBERG, Martin, S-151 68 Södertälje (SE)
(86) International application number: PCT/SE2005/001149
(87) International publication number: WO 2006/019348

(56) References cited:
- EP-A- 0 819 591
- DE-A1- 19 929 154
- DE-A1- 19 929 154
- JP-A- 2001 354 046
- JP-A- 2003 146 195
- JP-A- 2003 146 195
- US-A- 6 007 160
- US-A- 6 007 160
- US-B2- 6 684 987
- US-B2- 6 684 987

## Description

### Technical field

The present invention relates to a method for calculating a permitted maximum release speed for a braking power applied by at least one vehicle wheel brake. The invention also relates to a computer program, a computer program product and a computer for utilizing the method.

### Background art

Modern road vehicles are normally equipped with a brake pedal allowing a driver of the vehicle to send a brake request to a brake system ECU (Electronic Control Unit). The brake system ECU calculates a value corresponding to a deceleration/braking power to be applied by e.g. only wheel brakes or a combination of wheel brakes, a retarder and an exhaust brake, based on inter alia the position of the brake pedal, i.e. the stroke length from an unaffected, released position, which hereinafter is called the rest position.

There are some driving situations where a driver unintentionally applies pressure to the brake pedal in such a way that the vehicle is braked in an undesired way that causes discomfort for the driver and passengers in the vehicle as well as wear on e.g. the wheel brakes and tyres. A particularly undesired situation is when the driver unintentionally affects the brake pedal such that the pedal position is varied fairly rapidly, sometimes with increasing amplitude of the pedal stroke length. Such an undesired situation is most likely caused by natural oscillation in the brake pedal and the leg of the driver that affects the position of the brake pedal and causes the braking force applied by the wheel brakes to vary rapidly with the same frequency as the natural oscillation frequency and sometimes with increasing amplitude of the braking force.

Some attempts have been made to solve the problem caused by the natural oscillation. In electronically controlled braking systems the correlation between pedal stroke and the desired braking force calculated by the brake system ECU may be changed so that a change of pedal stroke in a stroke interval where natural oscillation is likely to occur causes less a change of braking force. However such a solution causes a decreased pedal sensitivity, which gives the driver a feeling that the wheel brakes are not engaged properly when the driver depresses the brake pedal within a range of the pedal stroke length where the pedal sensitivity is decreased.

Another attempt is to exchange the spring means, which is comprised in a brake pedal module, for pushing the brake pedal towards its rest position, i.e. the unloaded end position the brake pedal is positioned in when no foot pressure affects the brake pedal. By inserting a spring with higher stiffness than the original, the natural frequency of the brake pedal module may be increased. However a spring with higher stiffness demands a larger compression force for affecting the brake pedal, thus making driver initiated braking slower and more cumbersome.

Yet another attempt is to equip the brake pedal module with a damping element connected in parallel with the spring means for damping the brake pedal motion either in both pedal travel directions or only in one pedal travel direction, i.e. either in the pedal travel direction towards the rest position or in the opposite direction. When the brake pedal is released or the foot pressure is decreased, the damping element dampens the movement of the brake pedal towards the rest position, thus impeding an abrupt decrease of the braking force. Although this solution would decrease the problems caused by natural oscillation, it makes the brake pedal module more expensive, heavier, larger and more difficult to produce due to the damping element. Moreover the damping element dampens the brake pedal movement regardless of whether it is needed or not. In cases where the damping is not needed, e.g. where there are no natural oscillation, it would slow down the vehicle due to a slower release speed; thereby causing irritation as well as unnecessary wear on e.g. the wheel brakes. See for example US 6 684 987 B2.

### Disclosure of the invention

An object of the invention is to enable at least a decrease of the problems caused by natural oscillation in a brake pedal and a driver's leg being in contact with the brake pedal, without creating the disadvantages of prior attempts described above.

The invention relates to a method for calculating a permitted maximum release speed for a braking power applied by at least one vehicle wheel brake. The permitted maximum release speed is to be understood as a maximum allowed decrease rate of the braking power or deceleration, individually set for all brakes or for a total braking power, allowed by the braking system although, e.g., a driver suddenly has released the brake pedal and therefore demands no braking power. The braking power shall be interpreted as any unit of braking effect, force, moment, compressed air pressure, vehicle/wheel deceleration, or any other unit known to a person skilled in the art and that may be utilized by a brake control ECU when requesting a braking action of a certain magnitude to at least one wheel brake. The method comprises the steps of: calculating a value of a parameter, which is increased by a movement of a brake pedal in at least one direction or a change of direction for the movement of the brake pedal and decreased by a second value at least when a current position of the brake pedal is determined to be substantially the same as a previous brake pedal position, and determining the permitted maximum release speed in dependence of the calculated value of the parameter. Hereby is achieved that the permitted maximum release speed is dependent on previous actuations of the brake pedal and when and how frequent these actions were performed. Thus the permitted maximum release speed may be decreased during natural oscillations described above, thereby making it less disturbing.

In one embodiment the value of the parameter is increased by an absolute value corresponding to a magnitude of a distance difference between the current position and the previous position of the brake pedal.

In another embodiment the value of the parameter is increased by an absolute value corresponding to a magnitude of a distance difference between the current position and the previous position of the brake pedal only if the current position indicates that a smaller braking power is requested than in the previous position.

In yet another embodiment the value of the parameter is increased by a predetermined value if the current position indicates a change of direction for the movement of the brake pedal when compared to the previous pedal position or a latest of earlier pedal positions where a movement of the brake pedal was detected.

The method may comprise the step of always decreasing the value of the parameter by the second value or setting the first value to a predetermined, lowest value, if the first value is less than the second value, before the permitted maximum release speed is determined.

The method may comprise the step of setting the permitted maximum release speed to a maximum value, if the value of the parameter is between a predetermined, lowest value and a higher value set to allow two to three periods of natural oscillation with a predetermined average amplitude before the permitted maximum release speed is decreased. Hereby is achieved that the permitted maximum release speed is not decreased during common, desired braking actions.

The invention also relates to a computer program for calculating a permitted maximum release speed for a braking power applied by at least one vehicle wheel brake, comprising computer readable code means, which when run on a computer connected to a vehicle internal data network causes the computer to perform the method.

Furthermore the invention relates to a computer program product comprising a computer readable medium and the computer program recorded on the computer readable medium.

Moreover the invention relates to a computer adapted to be connected to a vehicle internal data network, comprising the computer program product.

### Brief description of the drawings

The objects, advantages and effects as well as features of the present invention will be more readily understood from the following detailed description of a preferred method, guide element and electric or mechanical component, as well as other embodiments, when read together with the accompanying drawings, in which: Fig 1 schematically shows a vehicle and some components particularly involved in an embodiment of the invention; Fig 2 is a schematic flow diagram of a loop according to a first embodiment; Fig 3 shows some examples of a correspondence between a parameter and a permitted maximum release speed; Fig 4 is a schematic flow diagram of a loop according to a second embodiment; Fig 5 is a schematic flow diagram of a loop according to a third embodiment; and Fig 6 is a schematic flow diagram of a loop according to a fifth embodiment.

### Mode(s) for carrying out the invention

While the invention covers various modifications and alternative constructions, embodiments of the invention are shown in the drawings and will hereinafter be described in detail. It is to be understood, however, that the specific description and drawings are not intended to limit the invention to the specific forms disclosed. On the contrary, it is intended that the scope of the claimed invention includes all modifications and alternative constructions thereof falling within the spirit and scope of the invention as expressed in the appended claims to the full range of their equivalents.

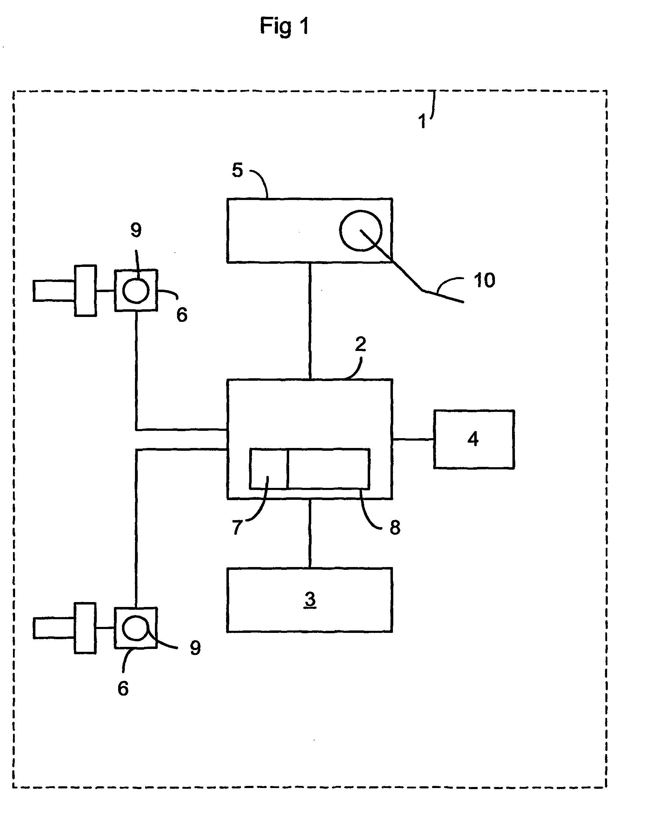

Fig 1 schematically shows some components which are comprised in a vehicle 1, such as a truck and bus, according to an embodiment of the invention. Here a computer 2 in the form of a brake control ECU is connected to other ECUs, controlling means and sensors, e.g. a retarder ECU 3, an exhaust brake ECU 4, a foot brake module 5, a trailer brake control module (not shown) and EPMs (Electric-pneumatic modulators) 6 via at least one vehicle internal data network comprising e.g. at least one CAN bus (Controller Area Network), Flexray bus, TTCAN bus (TimeTriggered CAN) and/or LIN busses (Local Interconnect Network). As is understood by a person skilled in the art, e.g. the foot brake module 5 does not have to be directly connected to the brake control ECU as shown in Fig 1, but may be connected to another ECU, which in turn sends a message comprising data associated with the brake pedal position and its movement to the brake control ECU. The brake control ECU comprises a computer program 7 for calculating e.g. a total braking force and the braking performed by each individual wheel brake, a retarder and e.g. an exhaust brake, taking into account various input parameters and predetermined characteristics of the braking system, such as an actual position of a brake pedal, brake pedal speed, wheel speeds, a traction control signal, an antilock brake system signal, feedback signals from the EPMs, yaw-rate signals and vehicle weight. The brake control ECU also takes into account a permitted maximum braking power release speed B.

The computer program 7 is stored in at least one computer program product 8 in the form of a storage means, e.g. a ROM (Read-only memory), a PROM (Programmable ROM), EPROM (Erasable PROM), Flash and EEPROM (Electrically EPROM). The EPMs 6 (only two are shown in Fig 1) are electro-pneumatic actuators, which receive a demanded brake pressure from the brake control ECU 2 and change the brake pressure on the wheel brakes accordingly. Each EPM 6 comprises inter alia a processor and a pressure sensor 9 for sensing a compressed air pressure level corresponding to a brake power exerted by an associated wheel brake device.

Having described an embodiment of a vehicle 1 and system wherein a method according to the invention may be implemented, different embodiments of the method will now be described. Joint achievement for all the embodiments described here is that the permitted maximum braking power release speed B is dependent on the way the driver has affected the pedal position before the permitted maximum braking power release speed is calculated.

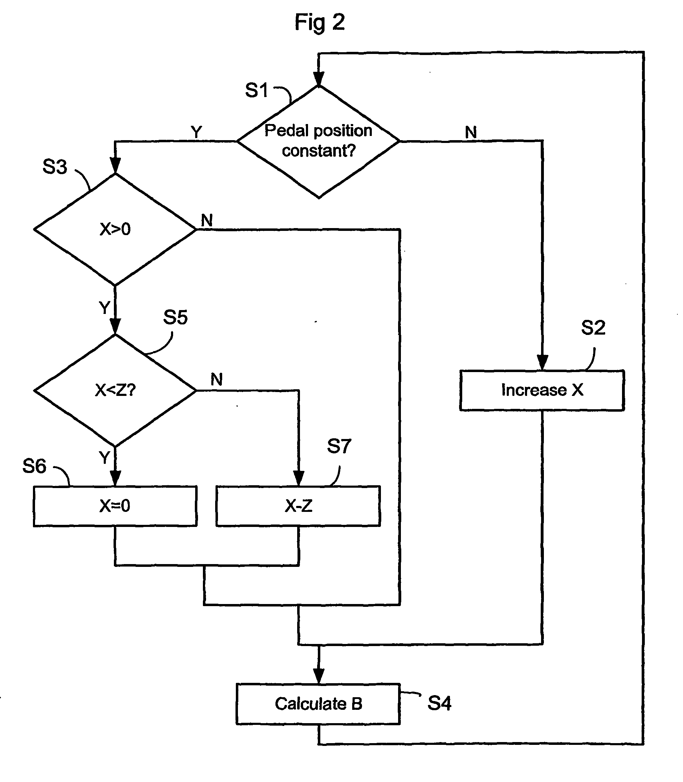

Fig 2 shows a flow diagram of a first embodiment of a loop executed at least partly by the brake control ECU through the computer program 7. In a first step S1 it is checked whether the pedal position has remained essentially constant. This can be checked by e.g. calculating a difference between the latest measured pedal position and the one before that (or any previously measured pedal position considered suitable) and then compare the absolute value of the difference with a small limit value set to filter out small changes that are seen as insignificant or within a marginal of measuring and calculation error. If the answer is 'no', i.e. the difference is larger than the limit value, the loop continues with a second step S2. If the answer is 'yes', i.e. the pedal position may be regarded as having remained in substantially the same position, the loop continues with a third step S3. The calculations above in step S1 do of course not have to be processed by the brake control ECU 2, but may be processed by a processor in the foot brake module 5 or an intermediate ECU and the result of the calculations sent in a message to the brake control ECU.

In step S2 the absolute value of the difference is added to a value of a parameter X, thus forming a new, larger value of the parameter X. If e.g. the absolute value corresponds to a pedal stroke length difference of 3 mm, the parameter X is an indication of pedal movements in mm and is increased with the value corresponding to 3 mm. Thereafter a fourth step S4 follows.

In step S3 it is checked whether or not the parameter X is larger than zero. If the answer is 'yes', i.e. X is larger than zero, the loop continues with a fifth step S5. If the answer is 'no', i.e. if X is zero, step S4 follows.

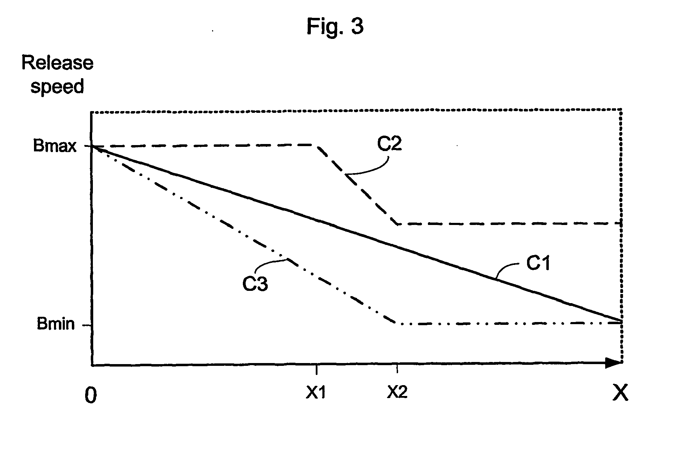

In step S4 the permitted maximum braking power release speed B is determined, e.g. through a calculation where the permitted maximum braking power release speed B is a function of X, or through a correspondence table. Fig 3 shows some examples of the correspondence between the permitted maximum braking power release speed and parameter X. A first correspondence is shown by the straight line C1 having a negative constant of proportionality and where a maximum value Bmax is allowed when X has a predetermined, lowest value, which here is zero, i.e. B=k*X+Bmax. A second correspondence illustrated with a second line C2 includes a first portion having a constant of proportionality of zero between X=0 and X=X1, a second portion having a negative constant of proportionality between X=X1 and X=X2 where X2 is larger than X1, and finally a third portion having a constant of proportionality of zero from X=X2 onwards, thus holding B at a constant level lower than Bmax. The value of X1 may be set to a value that e.g. allows the permitted maximum braking power release speed to be Bmax for at least two periods of the natural oscillation described above having a mean amplitude, which is empirically measured and calculated. Hereby the brake control ECU would not start to decrease the permitted maximum braking power release speed before at least two typical periods of the natural oscillation has occurred. Hence unnecessary damping of the braking power release speed is avoided during standard braking actions. A third correspondence illustrated with a third line C3 includes a first portion having a negative constant of proportionality between X=0 and X=X2, where B=Bmax when X=0 and B has a minimum value Bmin when X=X2. A second portion of the third line C3 has a constant of proportionality of zero from X=X2 onwards and where B=Bmin. There are of course a number of other possible correspondences that could be utilised according to the invention instead of the correspondences disclosed above, such as non-linear correspondences.

The permitted maximum braking power release speed B determined in step S4 is as indicated above taken into account by the brake control ECU when determining a new brake pressure/braking force to be generated by e.g. the EPMs when the brake pedal is moved towards the rest position. The brake pressure is not allowed to decrease more than a certain rate corresponding to the permitted maximum braking power release speed B. After step S4 the loop returns to the first step S1.

In step S5 it is checked if X is less than a predetermined value Z. If the answer is 'yes', i.e. if X<Z, the loop continues with a sixth step S6. If the answer is 'no', the loop continues with a seventh step S7. In step S6 the parameter X is set to zero and the loop continues with step S4. In step S7, X is decreased by Z and the loop continues with step S4.

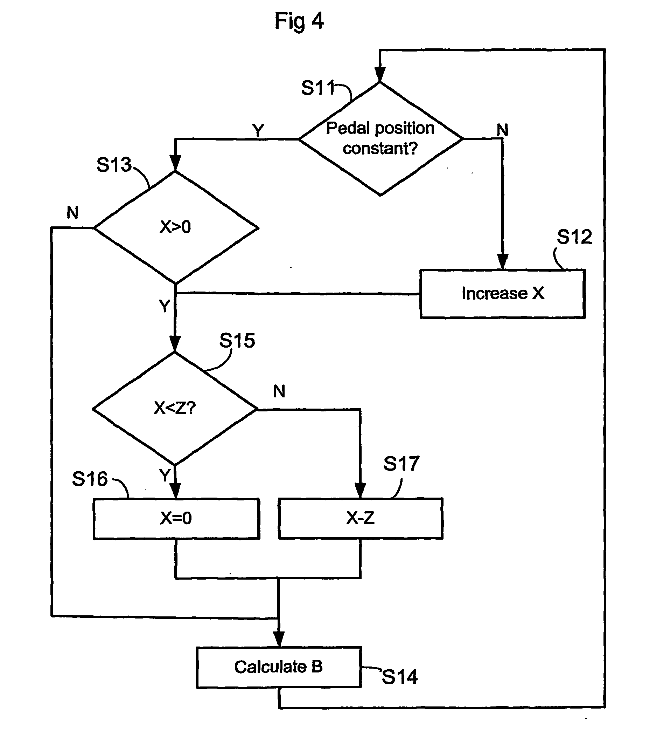

Fig 4 shows a second embodiment of a loop similar to the loop described above. A first step S11 con-esponds to step S1, a second step S12 corresponds to step S2, a third step S13 corresponds to step S3, a fourth step S14 corresponds to step S4 , a fifth step S15 corresponds to step S5, a sixth step S16 corresponds to step S6 and a seventh step S17 corresponds to step S7. The only difference is that Step S15 always follows after step S12. Thus X is decreased by Z, if X is larger than Z after step S12, even when the pedal position has been considered to have been moved in step S11.

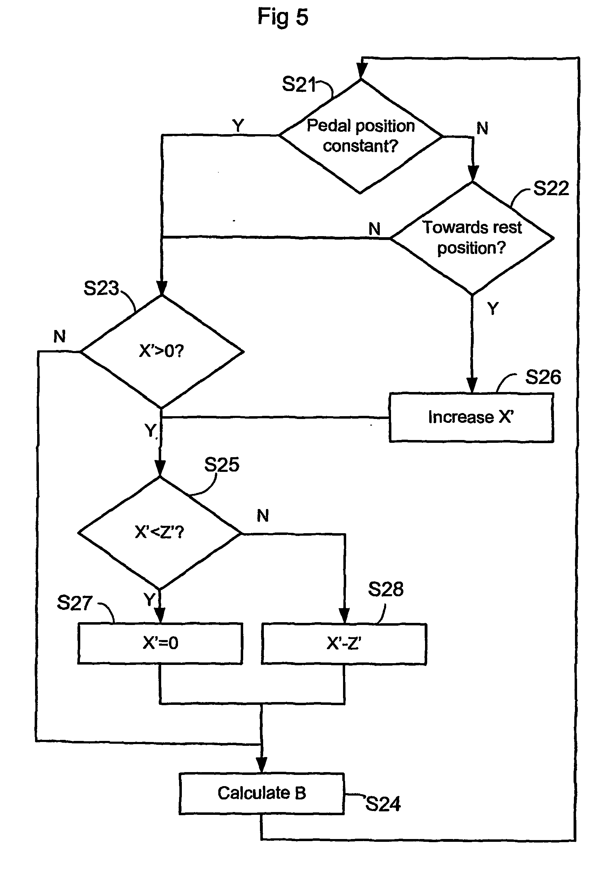

Fig 5 shows a third embodiment of a loop, which mainly differs from the second embodiment in that a parameter X', similar to X in the two above described embodiments, only is increased by returning pedal movements towards the rest position. In the previous embodiments, X is increased by movements in both directions. A first step S21 corresponds to the first step of the first and second embodiments, S1 and S11 respectively, but if the answer is 'no', i.e. the difference is larger than the limit value, the loop continues with a second step S22. If the answer is 'yes' in step S21 the loop continues with a third step S23 where it is checked whether or not the parameter X' is larger than zero. If the answer is 'no', i.e. if X' is zero, a fourth step S24 follows. If the answer is 'yes', i.e. X' is larger than zero, the loop continues with a fifth step S25.

In step S22 it is checked if the detected pedal movement is towards the rest position. This may be done by determining the sign of the difference calculated in step S21. if the answer is 'yes', i.e. the pedal movement is towards the rest position the loop continues with a sixth step S26. Step S23 follows after step S22, if the answer is 'no'.

In the fourth step S24 the permitted maximum braking power release speed B is determined, e.g. through a calculation where the permitted maximum braking power release speed B is a function of X' or through a correspondence table between X' and B in essentially the same way as described above in conjunction with step S4 and Fig 3. After step S24 the loop returns to step S21.

In step S25 it is checked if X' is less than a predetermined value Z'. If the answer is yes, i.e. if X'<Z', the loop continues with a seventh step S27. If the answer is no, the loop continues with an eighth step S28. In step S27 the parameter X' is set to zero and the loop continues with the fourth step S24. In step S28, X' is decreased with Z', thus forming a new value of X' and the loop continues with the fourth step S24.

In step S26 the difference calculated in S21 is added to X'. Thereafter step S25 follows.

Although X' in the third embodiment is increased by detected brake pedal movements towards the rest position, a person skilled in the art would appreciate that X' in another embodiment could be increased only by movements of the brake pedal away from the rest position. Yet an alternative embodiment may comprise all the individual steps S21-S28 of the third embodiment, but compared to the third embodiment may differ in that step S24 follows immediately after step S26.

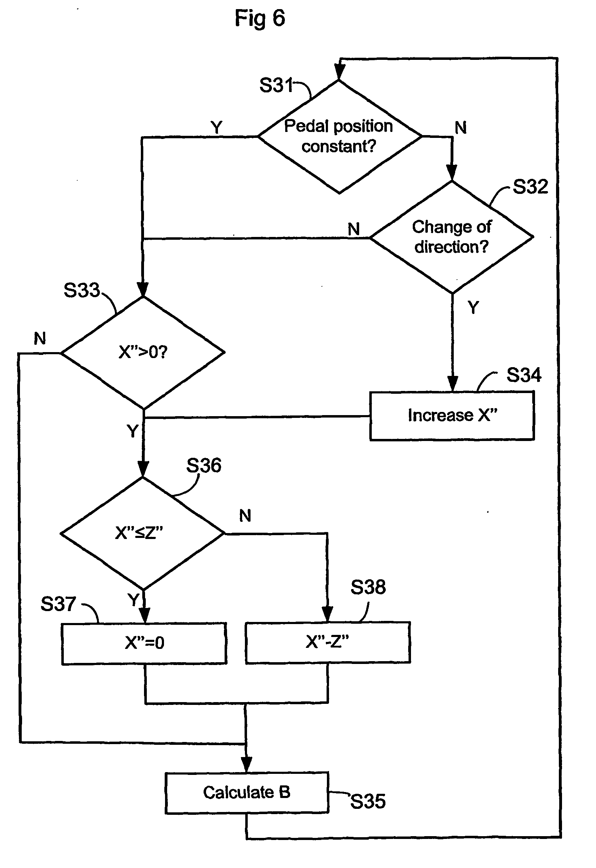

In a fifth embodiment of a loop, see Fig. 6, a first step S31 comprises the calculations performed in the first step, S1, S11 and S21 respectively, of the embodiments described above. If the answer is 'no', i.e. the difference is larger than the limit value, the loop continues with a second step S32. If the answer is 'yes', the loop continues with a third step S33.

In step 32 it is checked whether or not the detected pedal movement has changed direction compared to the last or any other preset previous time step 32 was processed, i.e. the most recently processed loop iteration when step 32 was performed or any selected previous loop iteration when step 32 was performed. This may be done by determining the sign of the difference calculated in the latest step S31 and then compare this sign with an earlier sign of a difference calculated in an earlier step S31 when step 32 was performed. If the sign from e.g. the latest step 31 is not the same as the earlier sign, the brake pedal is regarded as having been moved in an opposite direction compared to an earlier direction of the brake pedal and the loop continues with a fourth step S34. If the sign is the same as the earlier sign the loop continues with step S33, wherein it is checked whether or not a parameter X" is larger than zero. If the answer is 'no' in step S33, i.e. if X" is zero, a fifth step S35 follows. If the answer is 'yes', i.e. X" is larger than zero, the loop continues with a sixth step S36.

In step S34 the parameter X" is increased with a fixed value due to the detected change of direction of the brake pedal. The fixed value is suitably an integer, e.g. 3, empirically set in dependence on e.g. how many times the loop is processed every second and preferred brake system characteristics. After step S34 the loop continues with step S36.

Step S35 is similar to the steps S4, S14 and S24 of embodiments described above in that a permitted maximum braking power release speed B, here dependent on X", is determined, e.g. through a calculation where the permitted maximum braking power release speed B is a function of X" or through a correspondence table between B and X". After step S35 the loop returns to step S31 for a new loop iteration.

In step S36 it is checked whether X" is equal to or smaller than a value Z", which suitably is an integer, such as 1. In embodiments where X" is an integer and Z"=1 it only has to be checked whether or not X"=Z". If X" is less or equal to Z" the loop continues with a seventh step S37, else the loop continues with an eighth step S38.

In step S37, X" is set to zero and the loop continues to step S35. In step S38, Z" is subtracted from X" to generate a new X" to be used in step S35, which follows after step S38.

In alternative embodiments detection of the pedal position and whether the brake pedal has been moved or not, i.e. corresponding to the first step of the above described embodiments, may be computed in other ways than measuring and comparing pedal positions. In an alternative first step to the steps S1, S11, S21 and S31, a difference between a latest, measured pressure of the compressed air used for providing the brake pressure on the wheel brakes and the corresponding pressure measured before that (or any previously measured pressure considered suitable) is calculated. After that, exactly as in step S1, S11, S21 and S31 respectively, the absolute value of the difference is compared with a small limit value set to filter out small changes that are insignificant or within a margin of measuring and calculation error. The pressure is measured by the pressure sensors 9.

In all the embodiments described above the values Z, Z' and Z" are fixed values. They may of course also be values that are dependent on other parameters.

## Claims

1. A method for calculating a permitted maximum release speed (B) for a braking power applied by at least one vehicle wheel brake, comprising the steps of: calculating a value of a parameter (X, X', X"), which is increased by a movement of a brake pedal (10) in at least one direction or a change of direction for the movement of the brake pedal (10) and decreased by a second value (Z, Z', Z") at least when a current position of the brake pedal (10) is determined to be substantially the same as a previous brake pedal position, and determining the permitted maximum release speed (B) in dependence of the calculated value of the parameter (X, X', X").

2. A method according to claim 1, wherein the value of the parameter (X, X', X") is increased by an absolute value corresponding to a magnitude of a distance difference between the current position and the previous position of the brake pedal (10).

3. A method according to claim 1, wherein the value of the parameter (X, X', X") is increased by an absolute value corresponding to a magnitude of a distance difference between the current position and the previous position of the brake pedal (10) only if the current position indicates that a smaller braking power is requested than in the previous position.

4. A method according to claim 1, wherein the value of the parameter (X, X', X") is increased by a predetermined value if the current position indicates a change of direction for the movement of the brake pedal (10) when compared to the previous pedal position or a latest of earlier pedal positions where a movement of the brake pedal (10) was detected.

5. A method according to any one of the preceding claims, comprising the step of always decreasing the value of the parameter (X, X', X") by the second value (Z, Z', Z") or setting the first value to a predetermined, lowest value, if the first value is less than the second value, before the permitted maximum release speed (B) is determined.

6. A method according to any one of the preceding claims, comprising the step of setting the permitted maximum release speed (B) to a maximum value (Bmax), if the value of the parameter (X, X', X") is between a predetermined, lowest value and a higher value set to allow two to three periods of natural oscillation with a predetermined average amplitude before the permitted maximum release speed (B) is decreased.

7. A computer program (7) for calculating a permitted maximum release speed (B) for a braking power applied by at least one vehicle wheel brake, comprising computer readable code means, which when run on a computer (2) connected to a vehicle internal data network causes the computer (2) to perform the method according to claim 1.

8. A computer program product (8) comprising a computer readable medium and a computer program (7) according to claim 7 recorded on the computer readable medium.

9. A computer (2) adapted to be connected to a vehicle internal data network, comprising a computer program product (8) according to claim 7.

## Patentansprüche

1. Verfahren zum Berechnen einer zulässigen maximalen Auslösegeschwindigkeit (B) für eine Bremskraft, die von mindestens einer Fahrzeugradbremse aufgebracht wird, umfassend die Schritte:
Berechnen eines Werts eines Parameters (X, X', X"), der durch eine Bewegung eines Bremspedals (10) in mindestens einer Richtung oder einer Richtungsänderung für die Bewegung des Bremspedals (10) erhöht wird und der durch einen zweiten Wert (Z, Z', Z") zumindest dann verringert wird, wenn bestimmt wird, dass eine aktuelle Position des Bremspedals (10) im Wesentlichen die gleiche wie eine vorherige Bremspedalposition ist, und
Bestimmen der zulässigen maximalen Auslösegeschwindigkeit (B) in Abhängigkeit von dem berechneten Wert des Parameters (X, X', X").

2. Verfahren nach Anspruch 1, wobei der Wert des Parameters (X, X', X") um einen absoluten Wert entsprechend einer Größe einer Abstandsdifferenz zwischen der aktuellen Position und der vorherigen Position des Bremspedals (10) erhöht wird.

3. Verfahren nach Anspruch 1, wobei der Wert des Parameters (X, X', X") um einen absoluten Wert entsprechend einer Größe einer Abstandsdifferenz zwischen der aktuellen Position und der vorherigen Position des Bremspedals (10) nur dann erhöht wird, wenn die aktuelle Position darauf hinweist, dass eine geringere Bremskraft als in der vorherigen Position gefordert wird.

4. Verfahren nach Anspruch 1, wobei der Wert des Parameters (X, X', X") um einen vorgegebenen Wert erhöht wird, wenn die aktuelle Position auf eine Richtungsänderung für die Bewegung des Bremspedals (10) hinweist, wenn sie mit der vorherigen Pedalposition oder einer letzten von früheren Pedalpositionen verglichen wird, wo eine Bewegung des Bremspedals (10) ermittelt wurde.

5. Verfahren nach einem der vorhergehenden Ansprüche, umfassend den Schritt:
ständiges Verringern des Werts des Parameters (X, X', X") um den zweiten Wert (Z, Z', Z") oder Setzen des ersten Werts auf einen vorgegebenen, kleinsten Wert, wenn der erste Wert kleiner als der zweite Wert ist, bevor die zulässige maximale Auslösegeschwindigkeit (B) bestimmt wird.

6. Verfahren nach einem der vorhergehenden Ansprüche, umfassend den Schritt:
Setzen der zulässigen maximalen Auslösegeschwindigkeit (B) auf einen maximalen Wert (Bmax), wenn der Wert des Parameters (X, X', X") zwischen einem vorgegebenen, kleinsten Wert und einer höheren Wertemenge ist, um zwei bis drei Eigenschwingungsperioden mit einer vorgegebenen durchschnittlichen Amplitude zuzulassen, bevor die zulässige maximale Auslösegeschwindigkeit (B) verringert wird.

7. Computerprogramm (7) zum Berechnen einer zulässigen maximalen Auslösegeschwindigkeit (B) für eine Bremskraft, die von mindestens einer Fahrzeugbremse aufgebracht wird, umfassend:
ein computerlesbares Codemittel, das dann, wenn es auf einem Computer (2) ausgeführt wird, der mit einem fahrzeuginternen Datennetzwerk verbunden ist, den Computer (2) dazu veranlasst, das Verfahren nach Anspruch 1 auszuführen.

8. Computerprogrammprodukt (8), umfassend ein computerlesbares Medium und ein Computerprogramm (7) nach Anspruch 7, das auf dem computerlesbaren Medium gespeichert ist.

9. Computer (2), der dazu ausgebildet ist, mit einem fahrzeuginternen Datennetzwerk verbunden zu werden, umfassend ein Computerprogrammprodukt (8) nach Anspruch 7.

## Revendications

1. Procédé de calcul d'une vitesse de relâchement maximale autorisée (B) pour une force de freinage appliquée par au moins un frein de roue d'un véhicule, comprenant les étapes consistant à :
calculer une valeur d'un paramètre (X, X', X"), qui est augmentée sous l'effet d'un déplacement d'une pédale de frein (10) dans au moins un sens ou d'un changement de sens de déplacement de la pédale de frein (10) et qui est diminuée d'une deuxième valeur (Z, Z', Z") au moins quand la position courante de la pédale de frein (10) est déterminée comme étant essentiellement la même qu'une position précédente de la pédale de frein, et déterminer la vitesse de relâchement maximale autorisée (B) en fonction de la valeur calculée du paramètre (X, X', X").

2. Procédé selon la revendication 1, dans lequel la valeur du paramètre (X, X', X") est augmentée d'une valeur absolue correspondant à la grandeur d'une différence de distance entre la position courante et la position précédente de la pédale de frein (10).

3. Procédé selon la revendication 1, dans lequel la valeur du paramètre (X, X', X") n'est augmentée d'une valeur absolue correspondant à la grandeur d'une différence de distance entre la position courante et la position précédente de la pédale de frein (10) que si la position courante indique qu'une force de freinage plus petite que dans la position précédente est demandée.

4. Procédé selon la revendication 1, dans lequel la valeur du paramètre (X, X', X") est augmentée d'une valeur prédéterminée si la position courante indique un changement de sens de déplacement de la pédale de frein (10) par comparaison à la position précédente de la pédale ou à la dernière des positions antérieures pour laquelle un déplacement de la pédale de frein (10) a été détecté.

5. Procédé selon l'une quelconque des revendications précédentes, comprenant l'étape consistant à toujours diminuer la valeur du paramètre (X, X', X") de la deuxième valeur (Z, Z', Z") ou à régler la première valeur à une valeur prédéterminée la plus basse si la première valeur est inférieure à la deuxième valeur, avant que la vitesse de relâchement maximale autorisée (B) soit déterminée.

6. Procédé selon l'une quelconque des revendications précédentes, comprenant l'étape consistant à régler la vitesse de relâchement maximale autorisée (B) à une valeur maximale (Bmax) si la valeur du paramètre (X, X', X") est comprise entre une valeur prédéterminée la plus basse et une valeur plus élevée réglée de façon à permettre deux à trois périodes d'oscillation naturelle d'une amplitude moyenne prédéterminée avant de réduire la vitesse de relâchement maximale autorisée (B).

7. Programme informatique (7) pour calculer une vitesse de relâchement maximale autorisée (B) pour une force de freinage appliquée par au moins un frein de roue d'un véhicule, comprenant un moyen formant code lisible par ordinateur qui, lorsqu'il est exécuté sur un ordinateur (2) connecté à un réseau de données interne du véhicule, fait exécuter à l'ordinateur (2) le procédé selon la revendication 1.

8. Produit de programme informatique (8) comprenant un support lisible par un ordinateur et un programme informatique (7) selon la revendication 7, enregistré sur le support lisible par un ordinateur.

9. Ordinateur (2) adapté pour être connecté à un réseau de données interne d'un véhicule, comprenant un produit de programme informatique (8) selon la revendication 7.
